# EUROPEAN PATENT APPLICATION

(11) **EP 2 471 756 A1**
(43) Date of publication of application: **04.07.2012**
(21) Application number: 10811962.9
(22) Date of filing: 26.08.2010
(51) Int. Cl.: C03C 1/02, C03B 1/02, C03C 3/091

(54) **PROCESS FOR PRODUCING GRANULES AND PROCESS FOR PRODUCING GLASS PRODUCT**

(30) Priority: 28.08.2009 JP 2009198477
(71) Applicant: Asahi Glass Company, Limited, Tokyo 100-8405 (JP)
(72) Inventor: SHINOHARA, Nobuhiro, Tokyo 100-8405 (JP); ONODA, Hitoshi, Tokyo 100-8405 (JP)
(74) Representative: Müller-Boré & Partner Patentanwälte
(86) International application number: PCT/JP2010/064517
(87) International publication number: WO 2011/024913

(57) **Abstract**

To provide a process for producing granules of glass raw materials which have excellent strength and are less likely to form fine powder even when pneumatically conveyed to an in-fight heating apparatus and which are suitable for use in the production of glass by an in-flight melting method, and a process for producing a glass product, whereby high quality glass having a uniform composition can be obtained. A process for producing glass raw material granules for producing a borosilicate glass, which comprises a step of preparing a raw material slurry comprising glass raw materials including boric acid, and a liquid medium in which boric acid is soluble, wherein the amount of boric acid in the raw material slurry is from 5 to 30 mass% to the solid content of the raw material slurry, and the pH of the raw material slurry is at least 6.6, and a step of producing glass material granules from the raw material slurry by a spray drying granulation method.

## Description

### TECHNICAL FIELD

The present invention relates to a process for producing granules and a process for producing a glass product, particularly to a process for producing granules having excellent strength, which are suitable for use in the production of glass by an in-flight melting method, and a process for producing a glass product.

### BACKGROUND ART

A glass product is usually produced by melting glass raw materials by means of a glass melting furnace to form molten glass and then forming the molten glass into a prescribed shape, followed by solidification. However, in order to obtain a homogeneous molten glass by means of a glass melting furnace, it was required to maintain the melting state over a very long period of time, whereby a large energy consumption was unavoidable.

In order to solve such a problem, a process for producing a glass product employing a technique so-called an in-flight melting method, has been proposed in which particles (granules) made of a mixture of glass raw materials are heated and melted in a high temperature gas phase atmosphere to form molten glass particles, and then, the molten glass particles are collected to form a liquid phase (glass melt) (e.g. Patent Document 1 and Non-Patent Document 1).

In a case where a glass product is produced by means of an in-flight melting method, usually, by a method of pneumatically conveying granules, granules are supplied to an in-flight heating apparatus to melt granules made of a mixture of glass raw materials.

Further, it is known that granules to be used in the in-flight melting method can be produced by means of e.g. a spray drying granulation method (a spray drying method) (e.g. Patent Document 1).

Further, as a process for producing particles, a process is known wherein a slurry is supplied in the form of liquid droplets into a heating atmosphere to obtain agglomerates of primary particles, and such agglomerates are melted and spheroidized, and then solidified to obtain secondary particles (e.g. Patent Document 2).

### PRIOR ART DOCUMENTS

### PATENT DOCUMENTS

Patent Document 1: JP-A-2007-297239
Patent Document 2: JP-A-2007-99555
Non-Patent Document 1: Toru Iseda, "Research Result of NEDO Leading Research on "Innovative Energy Saving Glass Melting Technique by In-Flight Melting Method"" NEW GLASS Vol.23, No.4, 2008, P. 42-45

### DISCLOSURE OF INVENTION

### TECHNICAL PROBLEM

However, the conventional technique has had a problem that at the time of producing a glass product by means of an in-flight melting method, when granules made of a mixture of glass raw materials are pneumatically conveyed by e.g. an air stream to a high temperature gas phase atmosphere in the in-flight heating apparatus, a part of the granules is disintegrated to form a fine powder substantially. Such a fine powder is likely to drift and scatter in the in-flight heating apparatus or in the in-flight conveying apparatus for pneumatically conveying the granules, whereby the fine powder is likely to be discharged out of the in-flight heating apparatus. Therefore, if the granules containing a substantial amount of such a fine powder are supplied to the in-flight heating apparatus, the composition of molten glass obtainable by the in-flight melting method is likely to be changed, and the composition of the molten glass tends to be non-uniform. Consequently, also the glass composition of a glass product obtainable by forming and solidifying such molten glass tends to be non-uniform.

It is an object of the present invention to solve such a problem and to provide a process for producing granules of glass raw materials which have excellent strength and are less likely to form fine powder even when pneumatically conveyed to an in-flight heating apparatus and which are suitable for use in the production of glass by an in-flight melting method.

Further, it is another object of the present invention to provide a process for producing a glass product, whereby high quality glass having a uniform composition can be obtained.

### SOLUTION TO PROBLEM

The present inventors have conducted an extensive study to solve the above problem and as a result, have found it possible to improve the strength of granules in such a manner that at the time of producing glass containing boron oxide as a component by means of an in-flight melting method, a raw material slurry is prepared wherein prescribed glass raw materials including boric acid are dispersed in a liquid medium capable of dissolving boric acid, such as water, and at least a part of boric acid is dissolved in the liquid medium, and the liquid medium contained in the raw material slurry is removed by a spray drying granulation method to produce granules of glass raw materials.

Further, the present inventors have conducted a further study and have found that when the content of boric acid contained in the raw material slurry is adjusted to be within a range of from 5 to 30 mass% to the solid content of the raw material slurry, and the pH of the raw material slurry is adjusted to be at least 6.6 to prepare the raw material slurry in such a state that boric acid is sufficiently dissolved in the liquid medium, a fine powder becomes less likely to be formed even when the raw material slurry is pneumatically conveyed to the in-flight heating apparatus, and it becomes possible to obtain granules having a sufficient strength in a case where they are used for the production of glass by an in-flight melting method. Thus, the present invention has been accomplished.

That is, the present invention has adopted the following constructions in order to accomplish the above objects.

The process for producing glass raw material granules comprises a step of preparing a raw material slurry comprising glass raw materials including boric acid, and a liquid medium in which boric acid is soluble, wherein the amount of boric acid in the raw material slurry is from 5 to 30 mass% to the solid content of the raw material slurry, and the pH of the raw material slurry is at least 6.6, and a step of producing glass material granules from the raw material slurry by a spray drying granulation method.

Further, the process for producing glass raw material granules comprises a step of preparing a raw material slurry comprising glass raw materials including boric acid, a pH adjuster and a liquid medium in which boric acid is soluble, wherein the amount of boric acid in the raw material slurry is from 5 to 30 mass% to the solid content of the raw material slurry, and the pH of the raw material slurry is at least 7, and a step of producing glass material granules from the raw material slurry by a spray drying granulation method.

Further, the process for producing a glass product of the present invention comprises a step of heating the glass raw material granules produced by the above process to form molten glass, and a step of forming and solidifying the molten glass.

### ADVANTAGEOUS EFFECTS OF INVENTION

The glass raw material granules obtained by the process of the present invention are less likely to form fine powder even when pneumatically conveyed and have a sufficient strength in a case where they are used for the production of glass by an in-flight melting method. Such effects are considered to be obtainable by the following function of boric acid as a binder. That is, in the process for producing granules of the present invention, the raw material slurry contains a specific amount of boric acid, and the pH of the raw material slurry is at least 6.6, whereby boric acid is dissolved sufficiently in the liquid medium of the raw material slurry during the preparation of the raw material slurry. Boric acid dissolved in the liquid medium of the raw material slurry is moved from inside to the surface of granules and precipitated on the surface of granules, by the removal of the liquid medium in the step of producing granules. Boric acid thus precipitated on the surface of the granules is considered to be solidified by drying and functions as a binder.

Further, the process for producing a glass product of the present invention is a process comprising a step of heating the granules produced by the process for producing granules of the present invention, to form molten glass, and a step of forming and solidifying the molten glass, wherein since ones having sufficient strength are used as the granules, a fine powder is less likely to be formed even when the granules are pneumatically conveyed, and it is possible to obtain molten glass having a uniform composition, and it is possible to obtain a high quality glass product having a uniform glass composition. In the step of forming molten glass, even by a melting method employing a conventional glass melting furnace of Siemens furnace type, in a case where the granules obtained by the process of the present invention are utilized, the melting efficiency is good as compared with the case of utilizing so-called glass batch i.e. usual glass raw materials having a relatively large size, and a good effect is obtainable also from the viewpoint of energy saving, and in a case where an in-flight melting method is applied, still higher effects can be obtained.

### BRIEF DESCRIPTION OF DRAWINGS

Fig. 1 shows photographs of granules and glass particles in Example 3, Comparative Example 1 and Comparative Example 2.
Fig. 2 shows microphotographs of granules in Example 1.
Fig. 3 shows microphotographs of granules in Comparative Example 1.
Fig. 4 is a graph showing the relation between the time for stirring the raw material slurry and the pH of the raw material slurry.

### DESCRIPTION OF EMBODIMENTS

Now, the process for producing glass raw material granules of the present invention and the process for producing a glass product will be described in detail.

### <Glass and glass raw materials>

The glass raw material granules (hereinafter sometimes referred to simply as the granules) to be produced by means of the process of the present invention are glass raw material granules for the production of a borosilicate glass, which are useful for the purpose of producing a glass product made of a glass having a composition containing a boron component (borosilicate glass).

In the present invention, glass means oxide-type glass, and the respective components in the oxide type glass are represented by oxides, and mass proportions of the respective components are represented as calculated as oxides. The borosilicate glass is an oxide type glass containing silicon oxide as the main component and contains a boron component. The boron component in the borosilicate glass is boron oxide (a general term for boron oxide such as diboron trioxide (B₂O₃)), and is hereinafter represented by B₂O₃, and the mass proportion of boron oxide in the glass is represented as calculated as B₂O₃. The main components in the glass are likewise represented by oxides such as SiO₂, Al₂O₃, MgO, CaO, SrO, BaO, Na₂O, etc., and their mass proportions are represented as calculated as oxides. In the present invention, the borosilicate glass is an oxide type glass containing silicon oxide as the main component and containing boron oxide in an amount of at least 1 mass% as calculated as the above oxide.

The glass raw materials to be used for the production of the glass raw material granules are ones comprising the above-mentioned oxides or compounds capable of forming such oxides by e.g. thermal decomposition, and the compounds capable of forming such oxides may, for example, be hydroxides, carbonates, nitrates, halides, etc. The raw material capable of forming boron oxide in glass may, for example, be boric acid, boron oxide, colemanite [CaB₃O₄(OH)₃·H₂O], etc.

The glass raw materials are preferably ones adjusted so that they become a borosilicate glass wherein the content of boron oxide is from 1 to 30 mass% as represented by mass percentage based on oxides, more preferably ones adjusted so that they become a borosilicate glass wherein the content of boron oxide is from 2 to 20 mass%. In this embodiment, as the glass raw materials, ones containing boric acid are used, and a borosilicate glass is produced wherein the content of boron oxide is within the above range.

Boric acid is a general term for oxyacids of boron, such as orthoboric acid (H₃BO₃), but in the present invention, boric acid is meant for orthoboric acid (H₃BO₃). Boric acid is water-soluble and readily dissolves in water, particularly in warm water. Boron oxide is gradually reacted with water to form boric acid, which will be dissolved in water. Colemanite has a low solubility in e.g. water and is not useful as a boric acid source in the present invention.

In a case where water is used as the liquid medium for the raw material slurry to be used for the production of the glass raw material granules, boron oxide may also be used as a boric acid source for the raw material slurry (the amount of boric acid in the raw material slurry is from 5 to 30 mass% to the solid content in the raw material). That is, in a case where boron oxide in the raw material slurry is dissolved in water and changed to boric acid, boric acid in the raw material slurry may include boric acid derived from such boron oxide.

Further, in the raw material slurry, in addition to boric acid and boric acid derived from boron oxide, a boron compound which is not dissolved in the liquid medium, such as colemanite, may be contained. However, the boron compound not dissolved in the liquid medium, such as colemanite, will not be a boric acid source in the raw material slurry. That is, the amount of boric acid in the raw material slurry is the content excluding a boric acid compound not dissolved in the liquid medium, such as colemanite. However, a boron compound not dissolved in a liquid medium, such as colemanite, will be a boron oxide source for the borosilicate glass. Therefore, in a case where a borosilicate glass having a high boron oxide content is to be produced, it is preferred that colemanite is contained in the raw material slurry.

The amount of the boron component (the amount as calculated as oxides) in the glass raw materials to be used for the production of a borosilicate glass is usually required to be larger than the content of boron oxide in the desired borosilicate glass. This is because boron oxide is readily volatilized from the molten glass. Accordingly, in order to produce a borosilicate glass having a desired boron oxide content, the amount of the boron component in the glass raw materials is adjusted by taking into consideration the volatile portion of boron oxide. Here, a usual metal oxide such as silicon oxide is not volatile from the molten glass, and the amount of such a component in the glass raw materials (the amount as calculated as oxide) and the amount of the component in the obtainable borosilicate glass (the amount as calculated as oxide) are substantially equal.

In the present invention, the desired borosilicate glass is preferably a borosilicate glass containing little alkali component (an oxide of an alkali metal such as sodium or potassium) or substantially no alkali component (i.e. alkali-free). As such a borosilicate glass, a borosilicate glass having the following composition (1) as represented by mass percentage based on oxides, is preferred. Here, the following R represents an alkali metal. Further, metal oxides other than the following, non-metal oxide (such as sulfur oxide), halogens, etc. may further be contained in small amounts.

SiO₂: from 40 to 85 mass%, Al₂O₃: from 1 to 22 mass%, B₂O₃: from 2 to 20 mass%, MgO: 0 to 8 mass%, CaO: from 0 to 14.5 mass%, SrO: from 0 to 24 mass%, BaO: from 0 to 30 mass%, and R₂O: from 0 to 10 mass% (1)

A more preferred borosilicate glass is alkali-free glass of the above composition (1) wherein the content of the alkali component (R₂O) is at most 0.1 mass%.

The glass raw materials to be used for the production of the glass raw material granules are preferably ones adjusted so that they become a borosilicate glass having the above composition (1). As such a composition of glass raw materials (hereinafter referred to also as a glass matrix composition), a raw material mixture of metal oxide sources is employed which has substantially the desired composition of a borosilicate glass as calculated as oxides, except for a boron oxide source. The boron oxide source is adjusted so that its amount is larger by an amount corresponding to the volatile portion than the boron oxide content in the desired borosilicate glass. For example, as the raw materials for glass matrix composition to produce alkali-free borosilicate glass, the following metal oxide sources and the raw material mixture having the following composition may be mentioned.
SiO₂: from 40 to 60 mass%, Al₂O₃: from 5 to 20 mass%, H₃BO₃: from 5 to 30 mass%, CaB₃O₄(OH)₃·H₂O (colemanite): from 0 to 15 mass%, Mg(OH)₂: from 0 to 5 mass%, CaCO₃: from 0 to 10 mass%, SrCO₃: from 0 to 15 mass%, SrCl₂·6H₂O: from 0 to 5 mass%, and BaCO₃: from 0 to 30 mass%.

### <Glass raw material granules>

The glass raw material granules in the present invention are used as a raw material for producing a glass product by an in-flight melting method or by a glass melting method utilizing a common glass melting furnace of Siemens furnace type. In the in-flight melting method, the glass raw material granules are melted in a high temperature gas phase atmosphere to form molten glass particles, and the molten glass particles formed in the gas phase atmosphere are collected to form a glass melt at the furnace bottom. The glass melt held at the bottom of the glass melting furnace is taken out as molten glass from the glass melting furnace, and thereafter, the molten glass is formed and solidified to obtain a glass product, in the same manner as in the case of producing a usual glass product.

The glass composition of the molten glass particles is substantially equal to the glass composition of the molten glass, and the glass composition of the molten glass is substantially equal to the glass composition of the desired glass product obtained by forming and solidifying the molten glass. The glass composition of the molten glass particles or molten glass being substantially equal to the glass composition of a glass product means that a volatile component such as boron oxide is volatilized from the glass in a molten state (such as molten glass particles, glass melt at the furnace bottom, or molten glass taken out from a glass melting furnace), whereby the glass composition of the glass in a molten state and the glass composition of a glass product obtainable from such a molten glass will not be completely the same.

Individual molten glass particles formed by melting of individual glass raw material granules in a high temperature gas phase atmosphere, preferably have a substantially equal glass composition. When individual molten glass particles have a substantially equal glass composition, the necessity to homogenize the glass composition of the glass melt obtained by collecting them will decrease. If individual molten glass particles are different in their glass composition, the glass composition of the glass melt obtained by collecting them initially becomes non-uniform, whereby the time and energy will be required to homogenize such a glass melt. In order to let individual molten glass particles have a substantially equal glass composition, it is preferred to let the glass matrix composition (the raw material slurry composition) of individual glass raw material granules have a mutually uniform composition.

The average particle size of the glass raw material granules is made to be preferably within a range of from 30 to 1,000 µm, more preferably within a range of from 50 to 450 µm, further preferably within a range of from 70 to 400 µm. When the average particle size of the glass raw material granules is at least 30 µm, not only it is possible to reduce e.g. scattering to the flue during in-flight melting, but also it is possible to reduce volatilization of boric acid from the surface which is likely to occur during the melting, since the surface area per unit weight becomes small, such being desirable. Further, when the average particle size of the glass raw material granules is at most 1,000 µm, vitrification sufficiently proceeds to the interior of the granules, such being desirable. In order to form the granules into molten glass particles in a shorter time, the average particle size is preferably at most 400 µm, more preferably at most 200 µm. The average particle size of the glass raw material granules can be adjusted depending upon the conditions such as the composition, viscosity, etc. of the glass raw material slurry, the conditions of the spray drying granulation method, etc.

Here, in the present invention, the average particle size of particles such as the glass raw material granules or the glass raw material particles, is an average particle size obtainable by the following measuring method.

In the case of the glass raw material particles, a 50% diameter in the particle size distribution curve measured by means of a laser diffraction scattering method by a wet system (referred to also as D50 or a median diameter, i.e. when a powder is divided into two from a certain particle diameter, a diameter where the larger side and the smaller side become an equal amount) is taken. In the case of the glass raw material granules, a 50% diameter in the particle size distribution curve measured by means of a laser diffraction scattering method by a dry system, is taken.

In a glass melting method employing a common glass melting furnace using a so-called glass batch or glass cullets as the raw material, the glass raw material granules obtained by the process of the present invention may be put into the glass melting furnace instead of the glass batch. With the glass raw material granules which are less likely to form a fine powder and which have high strength like the glass granules of the present invention, their effects are observed also in a case where they are employed in a usual glass melting method.

### <Process for producing glass raw material granules>

The process for producing glass raw material granules of the present invention comprises a step of preparing a raw material slurry and a step of producing glass material granules from the raw material slurry by a spray drying granulation method.

The raw material slurry comprises the above-described glass materials containing boric acid, a pH adjuster as the case requires, and a liquid medium in which boric acid is soluble (hereinafter sometimes referred to simply as a liquid medium).

As the liquid medium, it is preferred to use water. As the liquid medium, other than water, it is possible to use an alcohol such as methanol or ethanol, or it is also possible to use a mixed medium of water and such an alcohol. As a liquid medium other than water, a liquid medium presenting a higher solubility of boric acid than water, is preferred. In the following description, a case where water is used as the liquid medium in which boric acid is soluble, will be primarily described, but the liquid medium is by no means limited to water.

The raw material slurry is obtained by dispersing glass raw materials including boric acid, and, if necessary, a pH adjuster in the liquid medium. A part or whole of boric acid included in the glass raw materials is dissolved in the liquid medium. Further, a part or whole of glass raw materials other than boric acid may be dissolved in the liquid medium (i.e. water-soluble compounds may be used as glass raw materials), or they may not be dissolved. Usually, main glass raw materials are insoluble in water.

After mixing the liquid medium and the glass raw materials including boric acid, it is preferred to continue the mixing operation such as stirring for a while. It is considered that boric acid will be dissolved in the liquid medium while this mixing operation is continued. Further, usually, the pH of the slurry increases while this mixing operation is continued. Further, by using, as a mixing means, a mixing means having a function to pulverize the glass raw material particles, for example, a pulverization means such as a ball mill, it is possible to increase the dissolution rate of boric acid and at the same time to pulverize the glass raw materials to finer particles.

The time for continuing the mixing operation is not particularly limited so long as it is possible to obtain a raw material slurry having a pH of at least 6.6, but it is preferably at least 30 minutes, more preferably at least 1 hour. It is considered that by continuing the mixing operation for at least 1 hour, a sufficient amount of boric acid will be dissolved in the liquid medium. Further, in a case where the pH of the slurry immediately after mixing the liquid medium and the glass raw materials including boric acid, is less than 6.6, it is preferred to continue the mixing operation until the pH becomes at least 6.6 thereby to obtain a raw material slurry. The upper limit of the time for continuing the mixing operation is not particularly limited, but if it is too long, such is not economical, and therefore, the time for continuing the mixing operation is usually at most 24 hours, preferably at most 12 hours.

The pH of the raw material slurry thus obtained is preferably at least 7, more preferably from 8 to 12, in a case where a pH adjuster is employed. The pH in such a case is a value at the time when the mixing operation has been continued for 1 hour from the time when the liquid medium and the glass raw material including boric acid were mixed. The solubility of boric acid depends on the pH of the raw material slurry. A sufficiently high solubility is obtainable by adjusting the pH of the raw material slurry to be at least 7. Further, it is preferred to increase the pH of the raw material slurry to at least 8, whereby the solubility of boric acid will be further increased. Further, also in a case where boron oxide is used as the boric acid source, if the pH of the raw material slurry is at least 6.6, it is considered that the boron oxide is more readily reacted with water and changed into boric acid, and thereby dissolved in the raw material slurry.

The pH of the raw material slurry is preferably at most 12, more preferably at most 10. It is preferred to adjust the pH to be at most 12, whereby it is possible to avoid a disadvantage such that the handling efficiency of the raw material slurry decreases, or the types of the useful pH adjuster decrease. A particularly preferred pH of the raw material slurry is from 8 to 10.

Here, it is conceivable that boric acid is neutralized in the raw material slurry having a pH of at least 7, but there is no trouble in providing the advantageous effects of the present invention, so long as the neutral salt is dissolved. Further, in the calculation of the amount of boric acid in the raw material slurry in the present invention, even if boric acid is present as neutralized in the form of a neutralized salt, it is calculated as boric acid so long as the neutral salt is dissolved.

The pH adjuster is not particularly limited, so long as it is one capable of adjusting the pH of the raw material slurry to be at least 7, but it is preferably determined depending upon e.g. type of glass obtainable by using the granules. Further, the amount of the pH adjuster is suitably determined depending upon the types of the glass raw materials or glass matrix composition, the amounts of glass raw materials, the amount of boric acid, the type or amount of the liquid medium, the type of the pH adjuster, etc.

In the case of producing a borosilicate glass containing an alkali metal oxide, it is possible to use a basic alkali metal compound as a pH adjuster. Such a basic alkali metal compound is preferably one capable of being used as a glass raw material. Such a basic alkali metal compound may be regarded as a part or whole of the alkali metal source in the glass raw materials. The basic alkali metal compound which can be used as a glass raw material, may, for example, be an alkali metal hydroxide such as sodium hydroxide, or an alkali metal carbonate such as sodium carbonate.

In the case of producing an alkali-free borosilicate glass, it is difficult to use an alkali metal compound as the pH adjuster. In the case of producing an alkali-free borosilicate glass, it is preferred to use a basic nitrogen compound containing no metal atom, as a pH adjuster. In a case where a highly volatile compound is used as the basic nitrogen compound, such a basic nitrogen compound will not remain in the glass raw material granules. Further, in a case where a low volatile compound is used as the basic nitrogen compound, and the basic nitrogen compound remains in the glass raw material granules, such a basic nitrogen compound will be decomposed and disappear at the time of melting the granules. As the basic nitrogen compound to be used as the pH adjuster, ammonia or a water-soluble amine compound is preferred. As the water-soluble amine compound, a water soluble alkanoyl amine or N-alkylalkanolamine is, for example, preferred, and specifically, monoethanolamine, diethanolamine or triethanolamine may, for example, be mentioned.

On the other hand, it is also possible to prepare a raw material slurry having a pH of at least 6.6 without using a pH adjuster. Even if the pH of the slurry immediately after mixing the liquid medium and the glass raw materials including boric acid is less than 6.6 as mentioned above, it is possible to obtain a raw material slurry by continuing the mixing operation until the pH becomes at least 6.6.

The pH of the slurry immediately after mixing the liquid medium and the glass raw materials including boric acid is usually from 5.5 to 6.5. However, the pH of the slurry increases while continuing the mixing operation to mix the liquid medium and the glass raw materials including boric acid. This is considered to be such that glass raw materials other than boric acid will react with boric acid to neutralize boric acid. As a part of raw materials for a borosilicate glass, usually an alkali metal compound or an alkaline earth metal compound is used, and even in the case of an alkali-free borosilicate glass, an alkaline earth metal compound is usually used as a raw material. Among such metal compounds, a basic compound such as a hydroxide or carbonate will gradually react with boric acid to neutralize boric acid while continuing the mixing operation of the slurry, whereby the pH of the slurry is considered to increase. Along with such an increase of the pH, the dissolution amount of boric acid in the aqueous medium is also considered to increase. Accordingly, even in a case where no pH adjuster is used, it is possible to obtain a raw material slurry having a pH of at least 6.6 by continuing the mixing operation to mix the liquid medium and the glass raw material including boric acid until the pH of the slurry becomes at least 6.6. Here, in a case where no pH adjuster is used, the pH of the obtainable raw material slurry is usually at most 9.

The time until the pH of the slurry becomes at least 6.6 varies depending upon the amount of boric acid, the types or composition of the glass raw materials other than boric acid (e.g. the type or amount of the above-mentioned basic compound), the mixing operation conditions, etc. Further, it is also possible to obtain a raw material slurry having a pH of at least 7 without using a pH adjuster. In a case where it takes too much time until the pH of the slurry becomes at least 6.6, it is preferred to use a pH adjuster. Further, also in a case where it is necessary to carry out the mixing operation in a short time, it is preferred to use a pH adjuster.

In a case where no pH adjuster is used, so long as the pH of the raw material slurry becomes at least 6.6, the time for continuing stirring to mix the liquid medium and the glass raw materials including boric acid is preferably at least 30 minutes, more preferably at least 1 hour. The mixing operation time of the slurry to bring the pH to at least 6.6 is influenced by the amount of boric acid, the types of glass raw materials, and the particle sizes of the respective glass raw materials, but the time for continuing the mixing operation to prepare a raw material slurry having a prescribed pH value of at least 6.6, is preferably at least 2 hours, more preferably at least 4 hours. It is considered that an adequate amount of boric acid will dissolve in the liquid medium by continuing the mixing and stirring for at least 1 hour, preferably at least 2 hours. The time for continuing the mixing operation is preferably at most 12 hours in consideration of the productivity of the glass raw material granules.

The glass raw materials contained in the raw material slurry are composed of glass raw materials for a glass matrix composition of a borosilicate glass. The amount of boric acid in the raw material slurry is from 5 to 30 mass% to the solid content of the raw material slurry. The solid content is a component excluding from the raw material slurry the liquid medium and other volatile components (components which are volatilized and disappear at the time of the spray drying granulation). The solid content is a component to constitute granules and is mostly composed of glass raw materials for the glass matrix composition. In a case where a high boiling point pH adjuster is used, such an adjuster may remain in the granules, but such an amount is little. Further, as mentioned above, there may be a case where a pH adjuster which becomes a glass raw material, may be used, and such a pH adjuster is regarded as a glass raw material.

When the content of boric acid to the solid content of the raw material slurry is at least 5 mass%, the function of boric acid as a binder is sufficiently obtainable, and it is possible to obtain granules having a sufficient strength, whereby it is possible to sufficiently suppress formation of a fine powder in a case where the granules are pneumatically conveyed in a gas phase atmosphere. Further, when the content of boric acid to the solid content of the raw material slurry is at most 30 mass%, it is less likely that the content of boric acid is so much that the degree of freedom of the composition of glass to be produced by using the granules is limited, such being desirable.

Boric acid in the raw material slurry is not required to be dissolved in its entire amount in the liquid medium. For example, in a raw material slurry containing a large amount of boric acid, boric acid not dissolved in the liquid medium may be present. The amount of boric acid in the raw material slurry is required to be at least 5 mass% to the solid content, and if it is less than 5 mass%, the advantageous effect in the present invention may not be obtainable. Therefore, it is considered necessary that boric acid is dissolved in an amount of at least 5 mass%.

As described hereinafter, in the spray drying granulation method, it is considered that in many cases, the raw material slurry is heated, and the liquid medium heated on the surface of particles during granulation is volatilized. Further, boric acid has an extremely high solubility in warm water as compared with in cold water. Accordingly, even if non-dissolved boric acid is present in the raw material slurry, in the process for producing granules from such a raw material slurry, the non-dissolved boric acid will be dissolved anew in the high temperature liquid medium which moves from inside to the surface of particles during the granulation and moves to the particle surface together with boric acid already dissolved in the raw material slurry and is precipitated.

The amount (mass) of the liquid medium contained in the raw material slurry is not particularly limited, so long as granules may be produced by means of the after-described spray drying granulation method, but it is preferably such an amount that the ratio of the solid content of the raw material slurry (substantially corresponding to all glass raw materials) to the liquid medium (i.e. the solid content (mass) to the liquid medium (mass)) is within a range of 1:2 to 1:0.5. When the ratio of the solid content to the liquid medium is within the above range, it is possible to produce the glass raw material granules by a spray drying granulation method, and as the amount of the solid content is increased, the particle size of the glass raw material granules obtainable by the spray drying granulation method becomes large, and the viscosity of the raw material slurry becomes high. Accordingly, the ratio of the solid content to the liquid medium is preferably suitably determined within the above range so that the average particle size of the glass raw material granules to be produced will be in the desired range, and the viscosity of the raw material slurry will be in such a range that the glass raw material granules can be easily and efficiently produced by the spray drying granulation method.

In a case where a part of glass raw materials is insoluble in the liquid medium, if the average particle size of the glass raw materials in the raw material slurry is too large as compared with the average particle size of the glass raw material granules, the compositions of the obtainable individual glass raw material granules are likely to be mutually non-uniform. Further, if the glass raw material particles in the raw material slurry are too large, a long time and a large energy will be required for vitrification of the granules, and it is likely to be difficult to form molten glass particles in the gas phase atmosphere. Therefore, in a case where the glass raw materials contain ones insoluble in the liquid medium, it is preferred to preliminarily pulverize the glass raw materials to fine particles, or to adopt a means to finely pulverize the glass raw material particles at the time of preparing the raw material slurry. For example, it is preferred that in a step of preparing a raw material slurry, the glass raw material particles are finely pulverized by e.g. a ball mill during the mixing or after the mixing of components to constitute the raw material slurry. In a case where a part of glass raw materials is insoluble in the liquid medium, the average particle size of the glass raw materials in the raw material slurry after preparation of the raw material slurry is preferably at most 50 µm, more preferably at most 30 µm, particularly preferably at most 20 µm.

The average particle size of the glass raw materials in the raw material slurry after the preparation of the raw material slurry is preferably from 1/100 to 1/3, more preferably from 1/50 to 1/5, particularly preferably from 1/30 to 1/8, of the average particle size of the glass raw material granules. Even when such glass raw materials are used, it is preferred to carry out a step of finely pulverizing the glass raw material particles before preparing the raw material slurry.

In the raw material slurry, in addition to the glass raw materials including boric acid, the pH adjuster as the case requires, and the liquid medium, a dispersant may be incorporated in a suitable amount, as the case requires, in order to stably disperse the glass raw material particles in the liquid medium or in order to stabilize the viscosity of the raw material slurry. As such a dispersant, "CELNA D305" (tradename, manufactured by Chukyo Yushi Co., Ltd.) which is an aqueous solution containing 40 mass% of an ammonium salt of a polycarboxylic acid, or "A-6114" (tradename, manufactured by TOAGOSEI CO., LTD.) may preferably be used. Further, in the raw material slurry, additives such as a viscosity-controlling agent, a surfactant, etc. may suitably be incorporated. The amounts of such additives are preferably at most 3 mass%, more preferably at most 2 mass%, in total to the raw material slurry. Further, such additives are preferably ones which will be volatilized or decomposed and dispersed by the time of melting of the glass raw material granules, thereby to present no influence over the glass composition.

Further, as an additive to improve the strength of the glass raw material granules, colloidal silica may be incorporated in the raw material slurry. Such colloidal silica is one having a function as a binder for the glass raw material granules, whereby, for example, a part of silicon oxide contained in the glass raw materials is made to be colloidal silica, it is possible to further improve the strength of the granules. Even if the amount of colloidal silica is increased, the effect for improving the strength will be saturated, and in consideration of the economical efficiency, the amount of colloidal silica is preferably at most 10 mass%, more preferably at most 5 mass%, to the solid content of the raw material slurry.

The raw material slurry is prepared by mixing the glass raw materials, the pH adjuster as the case requires, and the liquid medium by a suitable means. In the preparation of the raw material slurry, it is preferred to carry out stirring for a suitable time by means of a mixing means having a high stirring efficiency such as a high speed mixer in order to dissolve soluble components in the liquid medium and to uniformly disperse insoluble components in the liquid medium. Further, in the preparation of the raw material slurry, it is also preferred to use a pulverization means such as a ball mill which is capable of pulverizing insoluble glass raw materials in the glass raw materials at the same time as stirring. Particularly, it is preferred that the glass raw materials, the pH adjuster as the case requires, and the liquid medium are put and mixed in a container of a ball mill containing balls made of e.g. aluminum oxide (alumina), and stirring is carried out while pulverizing the glass raw materials for a suitable period of time. As mentioned above, such stirring of the raw material slurry is effective to increase the pH of the raw material slurry and to increase the solubility of boric acid. This is considered due to such that by the stirring, alkali components in the glass raw materials, such as CaCO₃, SrCO₃, etc. dissolve in the solvent. Accordingly, to obtain such an effect, it is preferred to carry out stirring by means of e.g. a ball mill which is capable of pulverizing the glass raw materials in the slurry.

Boric acid contained in the raw material slurry is partially or wholly dissolved in the liquid medium, and it may be dissolved at any stage in the step of preparing the raw material slurry. For example, all of the glass raw materials including boric acid, the pH adjuster and the liquid medium, as the materials for the raw material slurry, may be put in a container of a ball mill, and at the same time as dispersing insoluble glass raw materials in the liquid medium, soluble glass raw materials and a part or whole of boric acid may be dissolved in the liquid medium. In such a case, dispersion of the glass raw materials in the liquid medium and dissolution of boric acid in the liquid medium can be carried out simultaneously, whereby it is possible to efficiently prepare the raw material slurry.

Otherwise, raw materials excluding boric acid from the glass raw materials, and the liquid medium, as the materials for the raw material slurry, may be put into a container of a ball mill, followed by mixing for a prescribed time to disperse insoluble glass raw materials in the liquid medium and to increase the pH of the raw material slurry, and then boric acid is introduced, followed by mixing for a prescribed time to efficiently dissolve boric acid. In this case, it is possible to increase the pH of the raw material slurry and to sufficiently dissolve boric acid, without utilizing a pH adjuster, whereby it is possible to efficiently prepare the raw material slurry. Further, in this case, as the stirring time is long, which is effective to pulverize e.g. insoluble glass raw materials, whereby even when the particle sizes of the respective components in the glass raw materials are large, the raw material slurry can be prepared. In this case, the cost for preparing glass raw materials having a small particle size is higher as the particle size becomes small, and therefore, this method is effective also from the aspect of the raw material cost.

Then, volatile components such as the liquid medium contained in the raw material slurry are removed by a spray drying granulation method to produce glass raw material granules. The spray drying granulation method is a method of spraying the raw material slurry to form particles, to remove e.g. the liquid medium by evaporation (vaporization) from the raw material slurry particles and to form particles made of a solid content of the raw material slurry. As such a spray drying granulation method, a well known or known method may be used. In the spray drying granulation method, it is possible to employ a method of supplying a hot air, and the hot air inlet temperature or outlet temperature of the spray drying apparatus is not particularly limited. However, it is preferred to carry out granulation at a hot air inlet temperature of at least 200°C and at an outlet temperature of at least 100°C, whereby the glass raw material granules can be sufficiently dried. As a method for producing glass raw material granules from the raw material slurry, the spray drying granulation method is a method excellent in the mass production efficiency and capable of controlling the particle size of granules with a high precision, and at the same time, it is a method capable of maintaining the mixed state of the glass raw materials contained in the raw material slurry in a relatively good condition and capable of producing granules having a uniform glass matrix composition.

### <Process for producing glass product>

The process for producing a glass product in this embodiment comprises heating the glass raw material granules produced by the above-described production process to form molten glass, and forming and solidifying the molten glass to obtain a glass product.

For heating the glass raw material granules to form molten glass, a usual melting method utilizing a glass melting furnace of Siemens type is also effective, but it is preferred to apply an in-flight melting method. In the following, a case where the in-flight melting method is employed, will be described.

At the time of producing glass by means of the in-flight melting method, as a method for introducing the glass raw material granules into the high temperature gas phase atmosphere of an in-flight heating apparatus, it is preferred to employ a pneumatic conveying method to convey the granules by a stream of e.g. air, since such a method is convenient and easy to use. However, the conveying method is not limited thereto, and other conveying methods may be employed. The glass raw material granules obtained by using the process of the present invention are ones having a high strength and thus are preferred as being less susceptible to breakage not only when conveyed by in-flight conveying but also when conveyed by other methods. Whereas, glass raw material granules produced by a conventional production process have a low strength, whereby not only when conveyed by in-flight conveying but also when conveyed by other methods, in many cases, the particles are likely to be broken by collision of the particles among themselves during the transportation of the particles or by collision to an inner wall of the transportation path.

The method of melting the glass raw material granules in a high temperature gas phase atmosphere to form molten glass particles (molten granules) is not particularly limited, and it may, for example, be a method of using an in-flight heating apparatus wherein the glass raw material granules are heated by means of a thermal plasma arc or an oxygen combustion flame. Further, in order to collect the molten glass particles to form a glass melt, a method is usually employed wherein the molten glass particles falling by their own weight in the gas phase atmosphere are received and collected in a heat resistant container provided at a lower portion of the gas phase atmosphere to form a glass melt. Further, as a method of forming and solidifying molten glass taken out from the glass melt, to form a glass product, it is possible to employ, for example, a method for producing a plate glass product such as a float process or a down draw method, a method for producing a fiber glass product such as a melt spinning method, or a method for producing glass products of various shapes, such as a molding method.

### EXAMPLES

### TEST EXAMPLE 1

Using a ball mill provided with a container having a capacity of 10 liters and having 10 kg of alumina balls having a diameter of 20 mm accommodated, a raw material slurry was prepared, and granules were produced, as described below.

Firstly, glass raw materials having a composition shown in Table 1 or 2, a pH adjuster shown in Table 1 or 2, and water as a liquid medium, were put in the ratio (glass raw materials:water) shown in Table 1 or 2 in a ball mill and stirred for 1 hour to prepare a raw material slurry in each of Examples 1 to 12 and Comparative Examples 1 to 4 having a pH shown in Table 1 or 2. Here, in each of Examples 1, 2, 4, 5 and 8 to 12 and Comparative Examples 1 and 2, the preparation was made so that the objective values of the glass composition after melting would be, based on oxides, SiO₂: 60 mass%, Al₂O₃: 17 mass%, B₂O₃: 8 mass%, MgO: 3 mass%, CaO: 4 mass%, SrO: 7.6 mass%, BaO: 0.065 mass% and Fe₂O₃: 0.055 mass%. Further, in each of Examples 6 and 7 and Comparative Example 4, the preparation was made so that the objective values of the glass composition after melting would be, based on oxides, SiO₂: 50 mass%, Al₂O₃: 10 mass%, B₂O₃: 15 mass% and BaO: 25 mass%. The glass composition after melting was substantially along with the objective values in each of Examples 1, 2 and 4 to 12.

**TABLE 1**

| | | Ex.1 | Ex.2 | Ex.3 | Ex.4 | Ex.5 | Ex.6 | Ex.7 | Ex.8 | Ex.9 | Ex.10 | Ex.11 | Ex.12 |
|---|---|---|---|---|---|---|---|---|---|---|---|---|---|
| Spray drying conditions | | B | B | B | B | B | B | A | A | A | A | A | A |
| Glass raw materials | SiO₂ | 51 | 51 | 55 | 51 | 50 | 40 | 40 | 51 | 52 | 51 | 51 | 51 |
| | SiO₂ (colloidal silica) | | | | | 1 | | | | | | | |
| | Al₂O₃ | 15 | 15 | 16 | 15 | 15 | 8 | 8 | 15 | 15 | 15 | 15 | 15 |
| | Mg(OH)₂ | 4 | 4 | 4 | 4 | 4 | | | 4 | 4 | 4 | 4 | 4 |
| | CaB₃O₄(OH)₃·H₂O (colemanite) | | | | 13 | | | | 13 | 13 | | | |
| | CaCO₃ | 6 | 6 | | | 6 | | | | | 6 | 6 | 6 |
| | BaCO₃ | | | | | | 26 | 26 | | | | | |
| | SrCO₃ | 9 | 9 | 9 | 9 | 9 | | | 9 | 9 | 9 | 9 | 9 |
| | SrCl₂·6H₂O | 2 | 2 | 2 | 2 | 2 | | | 2 | 2 | 2 | 2 | 2 |
| | H₃BO₃ (boric acid) | 13 | 13 | 14 | 6 | 13 | 26 | 26 | 6 | 5 | 13 | 13 | 13 |
| Glass raw materials:water | | 1:0.5 | 1:1 | 1:0.5 | 1:0.5 | 1:1 | 1:1 | 1:1 | 1:1 | 1:1 | 1:1 | 1:1 | 1:0.5 |
| pH adjuster | | 2-amino-ethanol | 2-amino-ethanol | 2-amino-ethanol | 2-amino-ethanol | 2-amino-ethanol | 2-amino-ethanol | 2-amino-ethanol | ammonia | ammonia | 2-amino-ethanol | 2-amino-ethanol | 2-amino-ethanol |
| pH | | 9.0 | 9.0 | 9.5 | 9.5 | 9.0 | 8.3 | 9.0 | 9.7 | 9.8 | 8.8 | 7.7 | 8.9 |
| Average granular diameter (D50) µm | | 78 | 72 | 87 | 87 | 71 | 70 | 83 | 94 | 92 | 84 | 94 | 106 |
| Correlation function | | 1.000 | 1.000 | 1.000 | 0.996 | 0.999 | 0.995 | 1.000 | 0.994 | 0.983 | 0.996 | 0.991 | 0.999 |

**TABLE 2**

| | | Comp. Ex.1 | Comp. Ex.2 | Comp. Ex.3 | Comp. Ex.4 |
|---|---|---|---|---|---|
| Spray drying conditions | | B | B | B | B |
| Glass raw materials | SiO₂ | 52 | 52 | 46 | 40 |
| | SiO₂ (colloidal silica) | | | | |
| | Al₂O₃ | 15 | 15 | 10 | 8 |
| | Mg(OH)₂ | 4 | 4 | | |
| | CaB₃O₄(OH)₃·H₂O (colemanite) | 14 | 14 | | |
| | CaCO₃ | | | | |
| | BaCO₃ | | | 30 | 26 |
| | SrCO₃ | 9 | 9 | | |
| | SrCl₂·6H₂O | 2 | 2 | | |
| | H₃BO₃ (boric acid) | 4 | 4 | 14 | 26 |
| Glass raw materials:water | | 1:0.5 | 1:1 | 1:1 | 1:1 |
| pH adjuster | | 2-amino-ethanol | 2-amino-ethanol | Nil | Nil |
| pH | | 9.5 | 9.5 | 6.5 | 6.0 |
| Average granular diameter (D50) µm | | 106 | 77 | 58 | 78 |
| Correlation function | | 0.969 | 0.937 | 0.896 | 0.956 |

Further, the average particle sizes of glass raw materials (raw materials 1) shown in Tables 1 and 2 are shown in Table 3. Among glass raw materials shown in Tables 1 and 2, with respect to strontium chloride and boric acid being soluble raw materials, the average particle sizes were measured by means of a dry system laser diffraction scattering particle size distribution measuring apparatus (Microtrac MT3300, tradename, manufactured by NIKKISO CO., LTD.). With respect to other raw materials, the average particle sizes were measured by means of a wet system laser diffraction scattering particle size distribution apparatus (LA950-V2, tradename, manufactured by Horiba, Ltd.). Further, the average particle size of SiO₂ (colloidal silica) in Example 5 was 0.02 µm.

**TABLE 3**

| Raw materials 1 | D50 (µm) |
|---|---|
| SiO₂ | 10 |
| Al₂O₃ | 6 |
| Mg(OH)₂ | 7 |
| CaB₃O₄(OH)₃·H₂O (colemanite) | 16 |
| CaCO₃ | 14 |
| BaCO₃ | 7 |
| SrCO₃ | 6 |
| SrCl₂·6H₂O | 400 |
| H₃BO₃ (boric acid) | 46 |

Then, under condition A or B shown in Table 1 or 2, the solvent contained in the raw material slurry in each of Examples 1 to 12 and Comparative Examples 1 to 4 was removed to produce granules in each of Examples 1 to 12 and Comparative Example 1 to 4. Conditions A and B shown in Tables 1 and 2 are as follows.
Condition A: Spray dryer drying chamber diameter: ϕ2,000 mm (manufactured by Ohkawara Kakohki Co., Ltd.)
   Rotational speed of atomizer: 10,000 rpm
   Inlet temperature: 250°C, outlet temperature: 130°C
   Slurry supplying rate: from 15 to 20 kg/hr
Condition B: Spray dryer drying chamber diameter: ϕ2,600 mm (manufactured by PRECI Co., Ltd.)
   Rotational speed of atomizer: 12,000 rpm
   Inlet temperature: 300°C, outlet temperature: 120°C
   Slurry supplying rate: from 20 to 25 kg/hr

The strength of the respective granules in Examples 1 to 12 and Comparative Examples 1 to 4 thus obtained was evaluated by the following evaluation method.

That is, the glass raw material granules were collided to themselves, and the degree of breakage (disintegration) of the granules was evaluated by measuring the change in the particle size distribution of the granules. More specifically, firstly, by means of the particle distribution measuring apparatus (the above-mentioned Microtrac MT3300) to measure the particle size distribution using a laser diffraction scattering method, a compression air having a compression air pressure of 0 psi (0 kPa) or 50 psi (345 kPa) was blown to the granules immediately before put into the measuring chamber of the particle size distribution measuring apparatus to measure the particle size distribution under a compression air pressure of 0 psi (0 kPa) and the particle size distribution under a compression air pressure of 50 psi (345 kPa). Then, using the particle size distribution under the compression air pressure 0 psi (0 kPa) and the particle size distribution under a compression air pressure of 50 psi (345 kPa), the correlation coefficient of the two was calculated within the particle size range of from 0.972 to 322.8 µm. The results are shown in Tables 1 and 2. Here, the number of sampling was 68 points i.e. standard sieve aperture sections corresponding to the particle size of from 0.972 to 322.8 µm plus average aperture values corresponding to the upper and lower limit values of the respective aperture sections. Specifically, the correlation coefficient of the obtained two particle distributions was calculated by applying a CORREL function being a build-in function of EXCEL 2002SP3 manufactured by Microsoft to the cumulative percent data on the obtained two particle size distributions.

Further, as the average particle size of granules in each of Examples 1 to 12 and Comparative Examples 1 to 4, the 50% diameter (average granular diameter (D50)) of the particle size distribution curve measured under a compression air pressure of 0 psi (0 kPa) by means of a particle size distribution measuring apparatus (Microtrac MT3300), was measured. The results are shown in Tables 1 and 2.

The correlation coefficient shown in Tables 1 and 2 being closer to 1, means that the degree of similarity is higher between the particle size distribution under a compression air pressure of 0 psi (0 kPa) and the particle size distribution under a compression air pressure of 50 psi (345 kPa). The difference between the particle size distribution under a compression air pressure of 0 psi (0 kPa) and the particle size distribution under a compression air pressure of 50 psi (345 kPa) is considered to be attributable to disintegration of the granules caused by blowing of the compression air. Accordingly, the correlation coefficient being close to 1 can be evaluated to indicate that the granules are less likely to be disintegrated even when a compression air under 50 psi (345 kPa) is blown thereto, and the strength of the granules is excellent.

As shown in Tables 1 and 2, it is evident that the granules in Examples 1 to 12 are excellent in strength with their correlation coefficients being close to 1, as compared with the granules in Comparative Examples 1 and 2 wherein the content of boric acid contained in the glass raw materials is less than 5 mass%, or the granules in Comparative Example 3 and 4 wherein the pH of the raw material slurry is less than 7.

### TEST EXAMPLE 2

The granules in each of Example 3 and Comparative Examples 1 and 2 produced in the same manner as in Test Example 1 were pneumatically conveyed in a gas phase atmosphere in an in-flight heating apparatus and heated in the gas phase atmosphere by means of an oxygen burner to form molten glass particles, followed by solidifying the liquid molten glass particles to obtain the glass particles in each of Example 3 and Comparative Examples 1 and 2. The melting was carried out under such conditions that the burner heat quantity was 38 kW, and the feed amount as a rate of putting the granules into the flame of the oxygen burner, was from 50 to 60 g/min. The temperature of molten glass at that time was assumed to be from about 1,700 to 1,900°C.

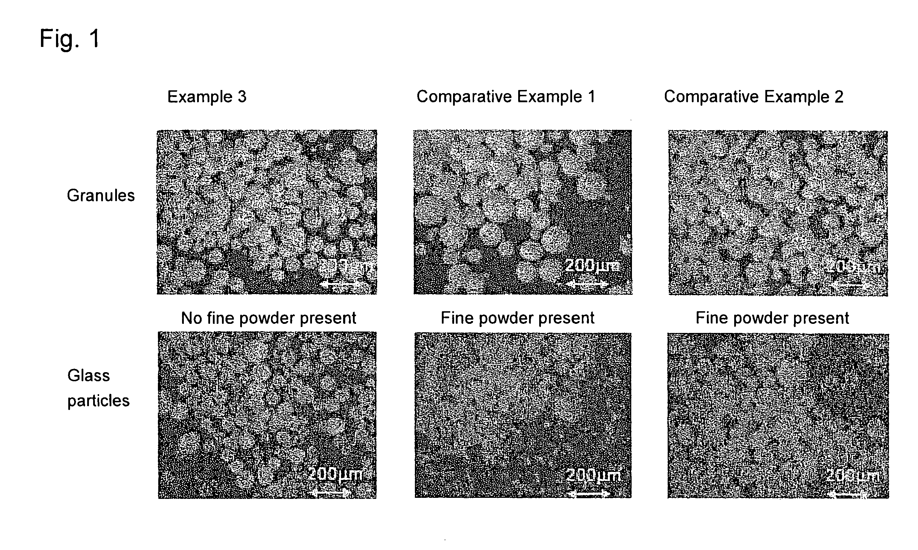

Photographs of the granules and glass particles in Example 3 and Comparative Examples 1 and 2 thus obtained are shown in Fig. 1.

As shown in Fig. 1, no fine powder was contained in the glass particles in Example 3, but a fine powder was contained in the glass particles in each of Comparative Examples 1 and 2.

This indicates that the granules in Example 3 had sufficient strength whereby no fine powder was formed even when pneumatically conveyed. Further, it is evident that the granules in each of Comparative Examples 1 and 2 had inadequate strength, whereby a fine powder was formed when pneumatically conveyed.

### TEST EXAMPLE 3

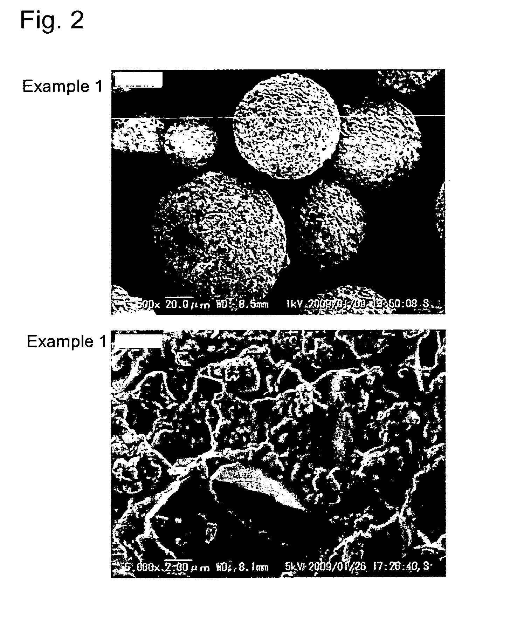

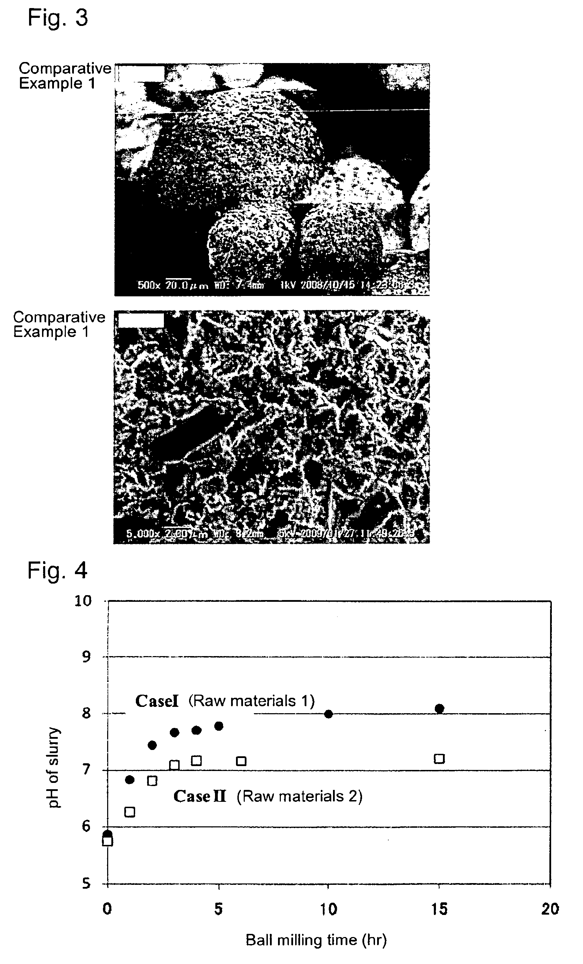

The surface of granules in each of Example 1 and Comparative Example 1 produced in the same manner as in Test Example 1 was observed. The results are shown in Figs. 2 and 3. Fig. 2 is microphotographs of the granules in Example 1, and Fig. 3 is microphotographs of the granules in Comparative Example 1.

Further, the surface of the granules in each of Example 1 and Comparative Example 1 produced in the same manner as in Test Example 1 was subjected to an elemental analysis by means of an Auger electron spectroscopy to measure the amounts of elements in the surface. The results are shown in Table 4. Here, the amount of each element is represented by atomic%.

**TABLE 4**

| Elements | B | N | O | Mg | Al | Si | Ca | Sr |
|---|---|---|---|---|---|---|---|---|
| Comp. Ex. 1 | 20.1 | 9.3 | 58.5 | 3.5 | 0.6 | 2.5 | 3.0 | 2.5 |
| Ex. 1 | 26.9 | 9.7 | 58.7 | 1.8 | 0.1 | 1.8 | 0.3 | 0.8 |

As shown in Table 4, in the surface of the granules in Example 1, a large amount of B was contained as compared with in the surface of the granules in Comparative Example 1. This is considered to be such that in Example 1, boric acid dissolved in the raw material slurry to obtain granules is sent from inside of the granules to the surface by the removal of the solvent and precipitated on the surface of the granules in the step of producing the granules.

Further, as shown in Figs. 2 and 3, the surface of granules in Example 1 is observed to have a smaller number of fine surface irregularities and to be covered with a vitrified substance, as compared with the surface of granules in Comparative Example 1. This is considered to be such that boric acid precipitated on the surface of the granules is functioning as a binder surrounding the granules.

### TEST EXAMPLE 4

By means of a ball mill provided with a container having a capacity of 1 liter and having 1 kg of alumina balls having a diameter of 10 mm accommodated, a raw material slurry was prepared as shown below, and the pH of the slurry was measured. In this test, as the glass raw materials, separately from ones (raw materials 1) having average particle sizes shown in Table 3, ones (raw materials 2) having average particle sizes shown in Table 5 were employed. The average particles sizes were measured by the same method as in the case of raw materials 1. Further, in the following test in Table 6 (Examples and Comparative Examples), no pH adjuster was used.

The glass raw materials having the composition shown in Example 13 in Table 6 and water as a liquid medium were put into a container of a ball mill in the ratio (glass raw materials:water) shown in Example 13 in Table 6 and stirred for 15 hours. From the initiation of stirring, 10 minutes later, 1 hour later, 2 hours later, 3 hours later, 4 hours later, 5 hours later, 10 hours later and 15 hours later, the slurry was sampled, and the change in pH was measured. The results are shown in Fig. 4 (Case 1). Here, the raw materials in this Case I represent a case where the raw material system (raw materials 1) shown in Table 3 was employed.

In the same manner, glass raw materials having the composition shown in Example 14 in Table 6 and water as a liquid medium were put into a container of a ball mill in a ratio of 1:1.2 (glass raw materials:water) and pulverized and mixed for 15 hours. From the initiation of mixing, 10 minutes later, 1 hour later, 2 hours later, 3 hours later, 4 hours later, 6 hours later and 15 hours later, the slurry was sampled, and the change in pH was measured. The results are shown in Fig. 4 (Case II). Here, the raw materials in this Case II represent a case where the raw material system (raw materials 2) shown in Table 5 was employed.

The pH of the slurry immediately after the mixing (10 minutes later after the initiation) was from 5.7 (Case II) to 6.0 (Case I), but it was found that by ball milling for at least 2 hours, in either case, the pH of the slurry became higher than 6.6. It is considered that along the ball milling, alkali components such as CaCO₃ and SrCO₃ were dissolved in water, whereby the pH was increased, even without adding a pH adjuster.

**TABLE 5**

| Raw materials 2 | D50 (µm) |
|---|---|
| SiO₂ | 52 |
| Al₂O₃ | 58 |
| Mg(OH)₂ | 4 |
| CaB₃O₄(OH)₃·H₂O (colemanite) | - |
| CaCO₃ | - |
| CaMg(CO₃)₂ (dolomite) | 204 |
| BaCO₃ | - |
| SrCO₃ | 371 |
| SrCl₂·6H₂O | 280 |
| H₃BO₃ (boric acid) | 345 |

**TABLE 6**

| | | Ex.13 | Ex.14 | Ex.15 | Ex.16 | Ex.17 | Comp. Ex.5 | Comp. Ex.6 |
|---|---|---|---|---|---|---|---|---|
| Spray drying conditions | | C | C | A | A | C | A | A |
| Raw material system | | Raw materials 1 | Raw materials 2 | Raw materials 2 | Raw materials 1 | Raw materials 1 | Raw materials 1 | Raw materials 2 |
| Glass raw materials | SiO₂ | 51 | 50 | 50 | 51 | 51 | 51 | 50 |
| | Al₂O₃ | 15 | 14 | 14 | 15 | 15 | 15 | 14 |
| | Mg(OH)₂ | 4 | 2 | 2 | 4 | 4 | 4 | 2 |
| | CaCO₃ | 6 | | | 6 | 6 | 6 | |
| | CaMg(CO₃)₂ (dolomite) | | 8 | 8 | | | | 8 |
| | BaCO₃ | | | | | | | |
| | SrCO₃ | 9 | 6 | 6 | 9 | 9 | 9 | 6 |
| | SrCl₂·6H₂O | 2 | 4 | 4 | 2 | 2 | 2 | 4 |
| | H₃BO₃ (boric acid) | 13 | 16 | 16 | 13 | 13 | 13 | 16 |
| Glass raw materials:water | | 1:1.5 | 1:2 | 1:1.5 | 1:1 | 1:1 | 1:1 | 1:1 |
| Pulverization time (ball mill) | | 8 | 12 | 12 | 6 | 4 | 1 | 1 |
| pH | | 8.5 | 7.2 | 6.7 | 7.8 | 8.1 | 6.0 | 6.1 |
| Average granular diameter (D50) µm | | 330 | 235 | 76 | 84 | 274 | 84 | 83 |
| Correlation function | | 0.976 | 0.976 | 0.985 | 0.978 | 0.982 | 0.912 | 0.905 |

### TEST EXAMPLE 5

By means of a ball mill provided with a container having a capacity of 20 m³ in which cobble stones having a diameter of from 50 to 70 mm, made of silica stone, were accommodated to occupy about 50% of the capacity, a raw material slurry was prepared as shown below, and the pH of the slurry was measured.

Using the glass raw material systems shown in Examples 13 and 14 in Table 6 (raw materials 1 and raw materials 2, respectively), the glass raw materials having a composition shown in Table 6 and water as a liquid medium were put into a container of a ball mill in the ratio (glass raw materials:water) shown in Tale 6 and pulverized and mixed for 8 hours and 12 hours, respectively, to prepare the raw material slurries in Example 13 and 14 having the pH shown in Table 6. Here, in Example 14 employing glass raw materials 2, the average particle size of the glass raw materials in the raw material slurry after preparation of the raw material slurry was 15 µm. This measurement was carried out by LA950-V2 manufactured by Horiba, Ltd. Further, in Example 13, preparation was carried out so that the objective values of the glass composition would be, based on oxides, 60 mass% of SiO₂, 17 mass% of Al₂O₃, 8 mass% of B₂O₃, 3 mass% of MgO, 4 mass% of CaO and 7.6 mass% SrO, and in Example 14, preparation was made so that the objective values of the glass composition after melting would be, based on oxides, 58 mass% of SiO₂, 17 mass% of Al₂O₃, 9 mass% of B₂O₃, 3 mass% of MgO, 4 mass% of CaO and 8 mass% of SrO. The glass composition after melting was substantially the same as the objective values in each of Examples 13 and 14.

Then, under the condition C shown in Table 6, the solvent contained in the raw material slurry in each of Examples 13 and 14 was removed by a spray drying granulation method to produce granules in each of Examples 13 and 14. The condition C shown in Table 5 is as follows.
Condition C: Spray dryer drying chamber diameter: ϕ7,000 mm (manufactured by MAEDA MATERIAL Co., Ltd.)
   Pressure nozzle system, nozzle diameter: ϕ2 mm × 7 nozzles
   Inlet temperature: 500°C, outlet temperature: 200°C

Here in Examples 13 and 14, as the method for calculation of the correlation coefficient, a method different from e.g. Examples 1 to 12 was adopted. That is, in Examples 13 and 14, the correlation coefficient was calculated within a particle size range of from 0.972 to 995.6 µm. Other conditions are the same as in other Examples. In this case, the number of sampling in the case of obtaining each particle size distribution was 81 points i.e. standard sieve aperture sections corresponding to the particle size of from 0.972 to 995.6 µm plus average aperture values corresponding to the upper and lower limit values in the respective aperture sections. The reason for changing the measurement of the correlation coefficient like this is as follows. That is, in the case of spray condition A or B, the average particle size was at a level of from about 70 to 100 µm, and the amount of granules of at least 300 µm was very small, and therefore, it was sufficient to take the correlation coefficient within a range of from 1 to 300 µm. On the other hand, in the case of spraying condition C, the granular size was large, and ones sieved by a sieve of 1 mm were used, whereby to take the correlation coefficient within a range of from 1 to 997 µm is considered to practically reflect the characteristics of the granules.

### TEST EXAMPLE 6

Granulation was carried out by changing the average granular size in Example 13 and changing spray drying condition C to spray drying condition A. The results of such granulation are shown in Example 15 in Table 6. Further, against Example 15, ones wherein the pulverization time by ball milling was changed to about 1 hour, are shown in Comparative Example 6 in Table 6. The average particle size of the glass raw materials in the slurry in Example 15 was 13 µm, and the average particle size of the glass raw materials in Comparative Example 6 was 35 µm. From these results, it is evident that even under different spray drying conditions, by increasing the pulverization time, the pH becomes at least 6.7, and the correlation coefficient becomes sufficiently large. Further, in Examples 14 and 15 and Comparative Example 6, the glass materials:water is 1:2, 1:1.5 and 1:1, respectively, i.e. slightly different, but the difference of this level presents no substantial influence over the strength of the granules.

### TEST EXAMPLE 7

Granulation was carried out by changing the glass raw material system in Example 15 (raw materials 2) to raw materials 1 in Table 5. The results of such granulation are shown in Example 16 in Table 6. Further, against Example 16, ones wherein the pulverization time by ball milling was changed to 1 hour are shown in Comparative Example 5 in Table 6. From these results, it is evident that even in a different raw material system, by increasing the pulverization time, the pH becomes at least 7.8, and the correlation coefficient also becomes sufficiently large. Further, in Examples 15 and 16 and Comparative Example 5, the glass materials:water is 1:1.5, 1:1 1 and 1:1, respectively, i.e. slightly different in Example 15, but the difference of this level presents no substantial influence over the strength of the granules.

### TEST EXAMPLE 8

Granulation was carried out by changing the pulverization time of 8 hours in Example 13 to 4 hours in Table 6. The results of such granulation are shown in Example 17 in Table 6. From the results of this granulation, it is evident that as shown in Fig. 4, by prolonging the pulverization time, the pH can be increased, and in 4 hours, the pH becomes at least 8.1, and the correlation coefficient becomes sufficiently large. Further, in Examples 13 and 17, the glass materials:water is 1:1.5 and 1:1, respectively, i.e. slightly different between them, but the difference of this level presents no substantial influence over the strength of the granules.

### INDUSTRIAL APPLICABILITY

Granules produced by the present invention are useful as a glass raw material to produce molten glass by an in-flight melting method. The obtained molten glass is formed into glass products of various shapes by a forming means such as a float bath, a fusion-forming machine, a roll out forming machine, a blow molding machine or a press-forming machine.

The entire disclosure of Japanese Patent Application No. 2009-198477 filed on August 28, 2009 including specification, claims, drawings and summary is incorporated herein by reference in its entirety.

## Claims

1. A process for producing glass raw material granules for producing a borosilicate glass, which comprises
a step of preparing a raw material Slurry comprising glass raw materials including boric acid, and a liquid medium in which boric acid is soluble, wherein the amount of boric acid in the raw material slurry is from 5 to 30 mass% to the solid content of the raw material slurry, and the pH of the raw material slurry is at least 6.6, and
a step of producing glass material granules from the raw material slurry by a spray drying granulation method.

2. The process according to Claim 1, wherein the raw material slurry further contains a pH adjuster.

3. The process according to Claim 1 or 2, wherein the pH of the raw material slurry is at least 7.

4. The process according to Claim 1, wherein the raw material slurry is prepared by contacting boric acid and the glass raw materials in the liquid medium in which boric acid is soluble, until the pH of the raw material slurry becomes at least 6.6.

5. The process according to Claim 4, wherein a part of the glass raw materials is a hydroxide or carbonate of a metal selected from alkali metals and alkaline earth metals.

6. The process according to any one of Claims 1 to 5, wherein a means to prepare the raw material slurry by mixing the glass raw materials including boric acid, and the liquid medium in which boric acid is soluble, is a ball mill.

7. The process according to any one of Claims 1 to 6, wherein the average particle size of the glass raw material granules is from 30 to 1,000 µm.

8. The process according to any one of Claims 1 to 7, wherein the liquid medium in which boric acid is soluble, is water.

9. The process according to any one of Claims 1 to 8, wherein the pH of the raw material slurry is from 8 to 12.

10. The process according to any one of Claims 1 to 9, wherein the glass raw materials are adjusted to form a borosilicate glass wherein the content of boron oxide is from 1 to 30 mass%, as represented by mass percentage based on oxides.

11. The process according to any one of Claims 1 to 10, wherein the glass raw materials are adjusted to form a borosilicate glass having the following composition as represented by mass percentage based on oxides (provided that the following R represents an alkali metal):
SiO₂: from 40 to 85 mass%, Al₂O₃: from 1 to 22 mass%, B₂O₃: from 2 to 20 mass%, MgO: 0 to 8 mass%, CaO: from 0 to 14.5 mass%, SrO: from 0 to 24 mass%, BaO: from 0 to 30 mass%, and R₂O: from 0 to 10 mass% (1)

12. A process for producing a glass product, which comprises
a step of heating the glass raw material granules produced by the process as defined in any one of Claims 1 to 11, to form molten glass, and
a step of forming and solidifying the molten glass.

13. The process for producing a glass product according to Claim 12, wherein the step of heating the glass raw material granules to form molten glass, comprises
a step of melting the glass raw material granules in a gas phase atmosphere to form molten glass particles, and
a step of collecting the molten glass particles to form a glass melt.

14. The process for producing a glass product according to Claim 13, wherein the glass raw material granules are pneumatically conveyed and introduced to the gas phase atmosphere.
